(19) **Europäisches Patentamt / European Patent Office / Office européen des brevets**

(11) **EP 1 714 179 B1**

(12) **FASCICULE DE BREVET EUROPEEN**

(45) Date de publication et mention de la délivrance du brevet:
**10.11.2010 Bulletin 2010/45**

(21) Numéro de dépôt: **05717588.7**

(22) Date de dépôt: **09.02.2005**

(51) Int Cl.:
*G02B 27/01* (2006.01)     *G02B 26/10* (2006.01)

(86) Numéro de dépôt international:
**PCT/FR2005/000287**

(87) Numéro de publication internationale:
**WO 2005/078510 (25.08.2005 Gazette 2005/34)**

(54) **PROCEDE ET DISPOSITIF POUR LA CREATION D'IMAGES RETINIENNES UTILISANT LE STIGMATISME DES DEUX FOYERS D'UN DIOPTRE SENSIBLEMENT ELLIPTIQUE**

VERFAHREN UND EINRICHTUNG ZUM ERZEUGEN VON RETINABILDERN UNTER VERWENDUNG DES ASTIGMATISMUS DER BEIDEN BRENNPUNKTE EINER IM WESENTLICHEN ELLIPTISCHEN SICHTVORRICHTUNG

METHOD AND DEVICE FOR GENERATING RETINAL IMAGES USING THE STIGMATISM OF THE TWO FOCI OF A SUBSTANTIALLY ELLIPTICAL SIGHT

(84) Etats contractants désignés:
**AT BE BG CH CY CZ DE DK EE ES FI FR GB GR HU IE IS IT LI LT LU MC NL PL PT RO SE SI SK TR**

(30) Priorité: **10.02.2004 FR 0401311**

(43) Date de publication de la demande:
**25.10.2006 Bulletin 2006/43**

(73) Titulaire: **Laster**
**91190 Gif sur Yvette (FR)**

(72) Inventeurs:
• **LIU, Zile**
  **F-91360 Epinay sur Orge (FR)**

• **HAMDANI, Rachid**
  **F-94700 Maisons Alfort (FR)**

(74) Mandataire: **de Saint-Palais, Arnaud Marie**
**Cabinet Moutard**
**35 Rue de la Paroisse**
**B.P. 20513**
**78005 Versailles Cedex (FR)**

(56) Documents cités:
**US-A- 5 384 654      US-A- 5 867 134**
**US-A1- 2001 010 598      US-B1- 6 252 565**

• **PATENT ABSTRACTS OF JAPAN vol. 014, no. 369 (P-1090), 9 août 1990 (1990-08-09) & JP 02 136818 A (SONY CORP), 25 mai 1990 (1990-05-25)**

EP 1 714 179 B1

**Description**

La présente invention concerne un procédé pour la création d'images rétiniennes utilisant le stigmatisme des deux foyers d'un dioptre sensiblement elliptique.

Elle a plus particulièrement pour objet de résoudre les problèmes de visualisation, par la rétine de l'oeil, de réalités virtuelles ou de réalités augmentées.

D'une façon générale, on sait que de nombreux travaux ont été effectués dans le domaine de l'affichage d'informations superposées à la vision de l'environnement captée par la rétine de l'oeil.

Ces procédés, destinés lors des premiers développements dans les années 1960 à des applications militaires, consistent à projeter sur une surface transparente semi réfléchissante des symboles et des informations concernant le pilotage de l'aéronef, c'est-à-dire en l'occurrence une ligne d'horizon, des informations de vitesse, d'altitude et de guidage pour l'approche de la piste d'atterrissage. Ces dispositifs, dits collimateurs tête haute, facilitent le pilotage de l'aéronef en permettant une perception directe du vecteur vitesse, de l'incidence et de la pente potentielle, ainsi qu'un horizon gradué et une piste synthétique avec les informations de positionnement sur le système d'atterrissage automatique. Cette symbologie permet un pilotage intuitif et précis d'approches avec ou sans visibilité ; elle doit cependant être suffisamment pertinente tout en n'occultant pas le champ de vision réel.

L'introduction de ces collimateurs tête haute est effective à ce jour dans les cockpits civils permettant essentiellement de faciliter l'approche et évitant ainsi des perceptions erronées, lors de l'approche à vue, de la hauteur et de la trajectoire dans des conditions atmosphériques particulières.

Plus récemment, les constructeurs automobiles développent des dispositifs d'affichage tête haute directement sur le pare-brise du véhicule ; en effet, le temps nécessaire au mouvement des yeux (temps de détournement) pour visionner l'information, ajouté au temps d'accommodation et de lecture de l'oeil (temps de fixation), ajouté au temps de retour (temps de détournement) est de 1 seconde dans l'environnement conventionnel avec tableau de bord ; il est de 0,5 seconde en vision tête haute ; cette réduction de temps global de perception d'une information correspond à un parcours du véhicule de 8 mètres à 60 kilomètres à l'heure.

Ces dispositifs nécessitent que l'image soit projetée sur une surface transparente par l'intermédiaire d'un appareil optique, placé en dessous ou au-dessus de la planche à instruments ou du tableau de bord, comportant plusieurs lentilles et miroirs. Ainsi, ces dispositifs s'apparentant à des rétroprojecteurs sont encombrants et nécessitent des aménagements dans l'habitacle de pilotage.

Une autre solution consiste à projeter l'image sur la visière d'un casque ; cette solution adoptée par les pilotes de chasse permet notamment d'afficher une vue synthétique de derrière ; elle est également adoptée par les chirurgiens en tant qu'aide à la conduite d'opérations chirurgicales, ainsi que par les motocyclistes.

La solution la plus ergonomique consiste à projeter l'image directement sur la rétine ; cette solution nécessite cependant la prise en compte du mouvement de l'oeil, un temps de latence faible, un champ de vision horizontal et vertical voisin de celui de l'oeil et une auto collimation à l'infini de l'image permettant l'accommodation naturelle de l'oeil.

Les dispositifs actuels consistent à placer un module optique, monté sur un casque, proche de l'oeil ; le module optique utilise soit une source de type laser soit des afficheurs de type LCD, LCoS ou OLED et des architectures optiques particulièrement encombrantes notamment lorsque les angles de champ de vision proposés à l'utilisateur sont élevés ; ces encombrements augmentent d'autant plus avec le champ de vision proposé à l'utilisateur.

Les documents US 6,252,565 et US 5,384,654 décrivent des dispositifs de l'art antérieur.

L'invention a donc plus particulièrement pour but de supprimer ces inconvénients.

En mettant en oeuvre un dioptre sensiblement elliptique comportant une surface semi réfléchissante, elle propose à cet effet :

- de positionner au voisinage du premier foyer (F) dudit dioptre sensiblement elliptique (E) :

    ○ un foyer dit "source" constitué par le diaphragme d'un sténopé formant point de convergence d'une image générée par un afficheur lumineux, ou par une source lumineuse, ou
    ○ un afficheur lumineux dont chaque point objet génère un faisceau tout d'abord convergent avant réflexion sur la surface semi réfléchissante dudit dioptre sensiblement elliptique, puis parallèle au voisinage de la pupille de l'oeil,

- de positionner au voisinage du second foyer (F') dudit dioptre sensiblement elliptique (E), un foyer dit "image" constitué par la pupille ou le centre de l'oeil (OE) de l'observateur,
- de projeter au voisinage de la rétine de l'oeil de l'observateur l'image générée par ledit afficheur lumineux ou par ladite source lumineuse, et réfléchie par la surface semi réfléchissante dudit dioptre sensiblement elliptique (E).

D'une façon plus précise, en ce qui concerne l'utilisation d'un afficheur lumineux, une optique génère, pour chaque point source, un faisceau tout d'abord convergent avant réflexion sur la surface semi réfléchissante. Après réflexion, les pinceaux lumineux contenant l'image inversée émise par l'afficheur arrivent alors collimatés au voisinage du second foyer dudit dioptre sensiblement elliptique.

L'utilisation d'un dioptre sensiblement elliptique permet en outre de réduire le diamètre de l'ensemble des faisceaux lumineux constituant l'image au voisinage du foyer dit "source" où est placée la source et donc les dimensions des optiques au voisinage de l'afficheur lumineux, lorsque un champ de vision élevé avec une collimation des faisceaux lumineux au voisinage de la pupille de l'oeil est recherché.

Par ailleurs, en ce qui concerne l'utilisation d'un sténopé, parmi les pinceaux lumineux émis par l'afficheur lumineux, seuls peuvent traverser le sténopé situé au voisinage du premier foyer, les pinceaux compris dans les cônes dont les sommets situés sur l'afficheur lumineux et s'appuyant sur le pourtour dudit sténopé ; l'ensemble de ces pinceaux lumineux constitue une image inversée de celle générée par l'afficheur lumineux ; la dimension de chaque point image est déterminée, d'une part, par la dimension du sténopé et, d'autre part, par les distances séparant l'afficheur lumineux du sténopé et la distance séparant le plan contenant l'image et le sténopé.

Ainsi, les pinceaux lumineux contenant l'image inversée émise par l'afficheur sont ensuite réfléchis par la surface semi réfléchissante du dioptre sensiblement elliptique puis focalisés au voisinage du second foyer dudit dioptre sensiblement elliptique compte tenu de l'existence du stigmatisme absolu entre deux points particuliers constituant les foyers de l'ellipse.

Par ailleurs, la pupille de l'oeil étant située au voisinage du second foyer, considérée comme pouvant être assimilée à un diaphragme ou sténopé, est à son tour traversée par une image issue des susdits pinceaux lumineux réfléchis, laquelle image aboutit sur la rétine de l'oeil.

Il est à noter que l'oeil d'une part et l'afficheur lumineux associé à son sténopé d'autre part, constituent deux chambres noires dont les "pupilles" sont conjuguées sur les deux foyers de l'ellipse constituant la surface semi réfléchissante du dioptre sensiblement elliptique.

Plusieurs modes d'exécution de l'invention seront décrits ci-après, à titre d'exemple non limitatif, avec référence aux dessins annexés dans lesquels :

- la figure 1 est une représentation schématique du principe théorique du dispositif selon l'invention,
- la figure 2 est une représentation schématique d'une première version du dispositif,
- la figure 3 est une représentation schématique d'une seconde version du dispositif,
- la figure 4 est une représentation schématique d'une troisième version du dispositif,
- la figure 5 est une modélisation du parcours des faisceaux lumineux dans le dispositif,
- la figure 6 est un exemple numérique de la variation des "demi-cordes" en fonction de l'angle d'ouverture de la source lumineuse,
- la figure 7 est une représentation schématique du parcours des faisceaux lumineux permettant de visualiser la résolution optique du dispositif,
- la figure 8 est un exemple numérique de la variation de la résolution optique en fonction de l'angle de pointage du faisceau émis par la source lumineuse,
- la figure 9 représente la distorsion optique engendrée par le dispositif,
- la figure 10 est une représentation schématique d'une configuration permettant la parallèlisation des faisceaux à l'entrée de l'oeil,
- la figure 11 est une représentation schématique d'une première solution permettant la correction de la distorsion optique,
- la figure 12 est une représentation schématique d'un mode de réalisation concernant la première solution corrigeant les aberrations optiques notamment celles liées à la distorsion, pour un premier point du champ,
- la figure 13 est une représentation schématique du mode de réalisation concernant la première solution corrigeant les aberrations optiques notamment celles liées à la distorsion, pour un second point du champ,
- la figure 14 est une représentation schématique d'une seconde solution permettant la correction des aberrations optiques notamment celles liées à la distorsion,
- les figures 15, 16, représentent de façon schématique deux autres modes de réalisation permettant d'obtenir des rayons parallèles à l'entrée de l'oeil et une correction des aberrations optiques,
- la figure 17 est un arrangement du dispositif selon l'invention selon les modes de réalisation représentés sur les figures 15, 16, et
- les figures 18, 19, représentent schématiquement un développement possible des modes de réalisation cités précédemment, permettant de réaliser un système de visualisation plus complet.

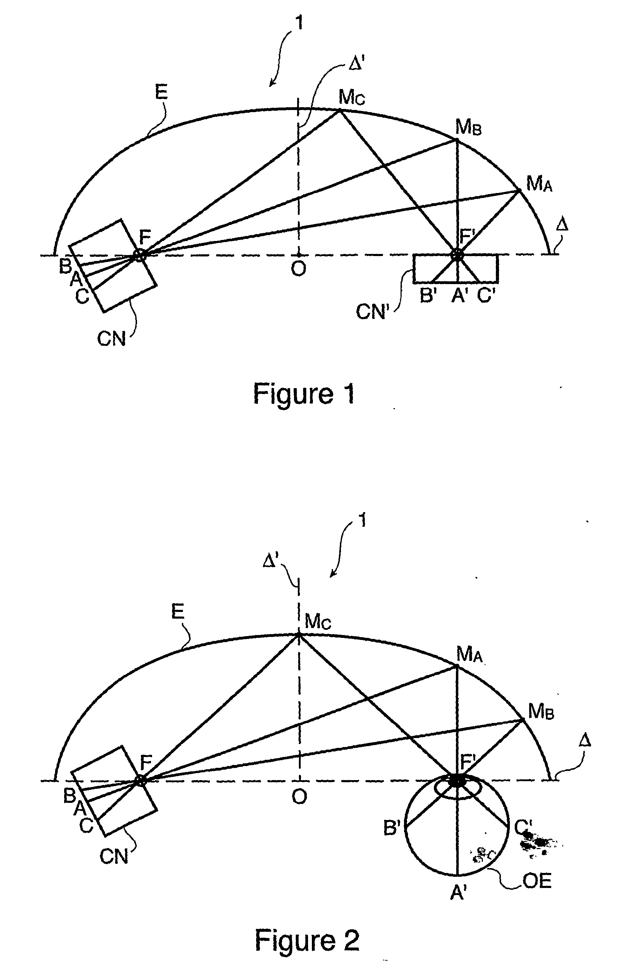

Dans l'exemple représenté sur la figure 1, le dispositif 1 selon l'invention est constitué :

- d'un dioptre sensiblement elliptique représenté par la demi ellipse E définie par son grand axe $\Delta$, son petit axe $\Delta'$,

son centre O, et ses deux foyers F, F' situés sur le grand axe $\Delta$, de part et d'autre du centre O,

- de deux chambres noires CN, CN' dont les pupilles sont situées respectivement au voisinage des foyers F, F'.

Ainsi, les faisceaux, issus de la chambre noire CN, traversent la pupille de ladite chambre noire CN, puis se réfléchissent sur la paroi concave du dioptre optique pour atteindre la chambre noire CN' après avoir traversé la pupille de ladite chambre noire CN' ; trois rayons symbolisent la trajectoire des susdits faisceaux, à savoir :

- le rayon $AM_AA'$ issu du point source A de la chambre noire CN, se réfléchissant au voisinage du point $M_A$ sur l'ellipse puis aboutissant au point image A' de la chambre noire CN',
- le rayon $BM_BB'$ issu du point source B de la chambre noire CN, se réfléchissant au voisinage du point $M_B$ sur l'ellipse puis aboutissant au point image B' de la chambre noire CN',
- le rayon $CM_CC'$ issu du point source C de la chambre noire CN, se réfléchissant au voisinage du point $M_C$ sur l'ellipse puis aboutissant au point image C' de la chambre noire CN'.

Dans l'exemple représenté sur la figure 2, le dispositif 1 selon l'invention est constitué :

- d'un dioptre sensiblement elliptique représenté par la demi ellipse E définie par son grand axe $\Delta$, son petit axe $\Delta'$, son centre O, et ses deux foyers F, F' situés sur le grand axe $\Delta$, de part et d'autre du centre O,
- d'une chambre noire CN, dont la pupille est située au voisinage du foyer F,
- d'un oeil OE, représenté schématiquement par un cercle et dont la pupille est située au voisinage du foyer F'.

Cette configuration constitue une première version du dispositif selon l'invention.

En effet, les faisceaux, issus de la chambre noire CN, traversent la pupille de ladite chambre noire CN, puis se réfléchissent sur la paroi concave du dioptre optique pour atteindre la rétine de l'oeil OE après avoir traversé la pupille dudit oeil OE ; trois rayons symbolisent la trajectoire des susdits faisceaux, à savoir :

- le rayon $AM_AA'$ issu du point source A de la chambre noire CN, se réfléchissant au voisinage du point $M_A$ sur l'ellipse puis aboutissant au point image A' de la rétine de l'oeil OE,
- le rayon $BM_BB'$ issu du point source B de la chambre noire CN, se réfléchissant au voisinage du point $M_B$ sur l'ellipse puis aboutissant au point image B' de la rétine de l'oeil OE,
- le rayon $CM_CC'$ issu du point source C de la chambre noire CN, se réfléchissant au voisinage du point $M_C$ sur l'ellipse puis aboutissant au point image C' de la rétine de l'oeil OE.

On peut constater que cette première configuration autorise un champ de vision important ; elle nécessite néanmoins que l'oeil soit fixe par rapport au dioptre sensiblement elliptique.

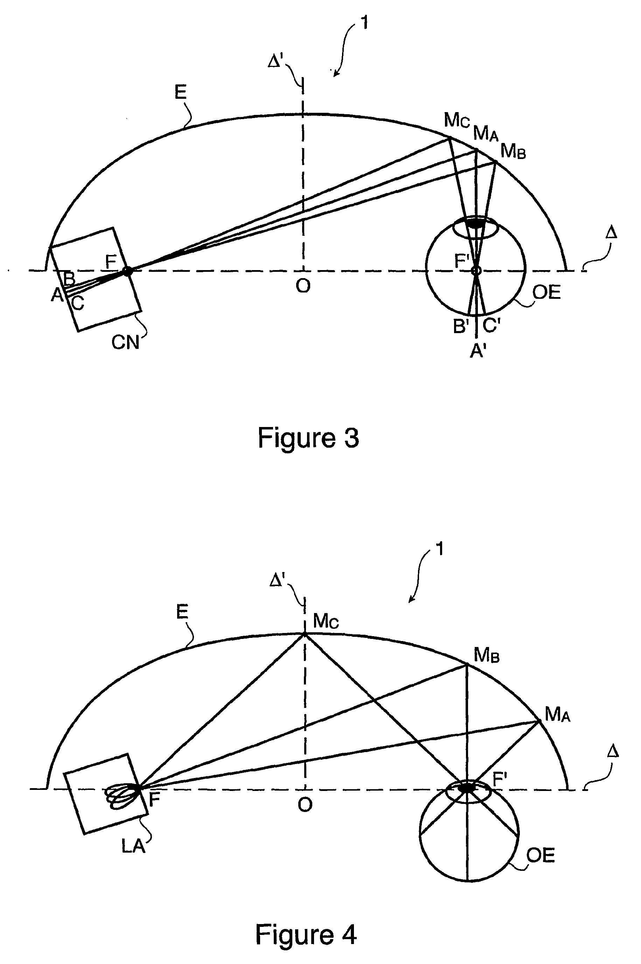

Dans l'exemple représenté sur la figure 3, le dispositif 1 selon l'invention est constitué :

- d'un dioptre sensiblement elliptique représenté par la demi ellipse E définie par son grand axe $\Delta$, son petit axe $\Delta'$, son centre O, et ses deux foyers F, F' situés sur le grand axe $\Delta$, de part et d'autre du centre O,
- d'une chambre noire CN, dont la pupille est située au voisinage du foyer F,
- d'un oeil OE, représenté schématiquement par un cercle et dont le centre est situé au voisinage du foyer F'.

Cette configuration constitue une deuxième version du dispositif selon l'invention.

En effet, les faisceaux, issus de la chambre noire CN, traversent la pupille de ladite chambre noire CN, puis se réfléchissent sur la paroi concave du dioptre optique pour atteindre la rétine de l'oeil OE après avoir traversé la pupille dudit oeil OE ; trois rayons symbolisent la trajectoire des susdits faisceaux, à savoir :

- le rayon $AM_AA'$ issu du point source A de la chambre noire CN, se réfléchissant au voisinage du point $M_A$ sur l'ellipse puis aboutissant au point image A' de la rétine de l'oeil OE,
- le rayon $BM_BB'$ issu du point source B de la chambre noire CN, se réfléchissant au voisinage du point $M_B$ sur l'ellipse puis aboutissant au point image B' de la rétine de l'oeil OE,
- le rayon $CM_CC'$ issu du point source C de la chambre noire CN, se réfléchissant au voisinage du point $M_C$ sur l'ellipse puis aboutissant au point image C' de la rétine de l'oeil OE.

On peut constater que cette deuxième configuration ne permet pas un champ de vision important, étant donné que le champ perçu est limité par le diamètre de la pupille de l'oeil ; elle autorise néanmoins le balayage du champ par le pivotement de l'oeil.

Dans l'exemple représenté sur la figure 4, le dispositif 1 selon l'invention est constitué :

- d'un dioptre sensiblement elliptique représenté par la demi ellipse E définie par son grand axe Δ, son petit axe Δ', son centre O, et ses deux foyers F, F' situés sur le grand axe Δ, de part et d'autre du centre O,
- d'un laser LA émettant un faisceau lumineux collimaté, d'orientation variable, dont le centre de déflection est situé au voisinage du foyer F,
- d'un oeil OE, représenté schématiquement par un cercle et dont la pupille est située au voisinage du foyer F'.

Cette configuration constitue une troisième version du dispositif selon l'invention.

En effet, les faisceaux, issus du laser LA, sont défléchis au voisinage du foyer F, puis se réfléchissent sur la paroi concave du dioptre optique pour atteindre la rétine de l'oeil OE après avoir traversé la pupille dudit oeil OE ; trois rayons symbolisent la trajectoire des susdits faisceaux, à savoir :

- le rayon $FM_AA'$ issu du laser LA, se réfléchissant au voisinage du point $M_A$ sur l'ellipse puis aboutissant au point image A' de la rétine de l'oeil OE,
- le rayon $FM_BB'$ issu du laser LA, se réfléchissant au voisinage du point $M_B$ sur l'ellipse puis aboutissant au point image B' de la rétine de l'oeil OE,
- le rayon $FM_CC'$ issu du laser LA, se réfléchissant au voisinage du point $M_C$ sur l'ellipse puis aboutissant au point image C' de la rétine de l'oeil OE.

On peut constater que l'image portée par le balayage du faisceau lumineux collimaté issu du laser A, est "inscrite" sur la rétine de l'oeil OE.

D'une manière plus précise, le susdit faisceau lumineux collimaté possède un certain diamètre ; par conséquent, les rayons marginaux, parallèles au rayon principal vont converger après réflexion sur le dioptre sensiblement elliptique au voisinage de la pupille ; ainsi, le faisceau reçu par l'oeil sera légèrement divergent au voisinage de la rétine, provoquant une vision par ledit oeil non conforme à la perception d'un objet placé à l'infini.

Ainsi, une divergence du faisceau capté par la rétine de 1mrad crée l'illusion d'un point source de 4 mm situé à 4 mètres.

Quant au champ de vision du dispositif selon cette troisième version, celui-ci est fonction de l'ouverture de balayage du faisceau lumineux collimaté. D'une manière générale, on peut représenter la structure de propagation des rayons, décrits précédemment, issus du foyer F, se réfléchissant sur l'ellipse E et aboutissant au foyer F', sous une forme linéaire.

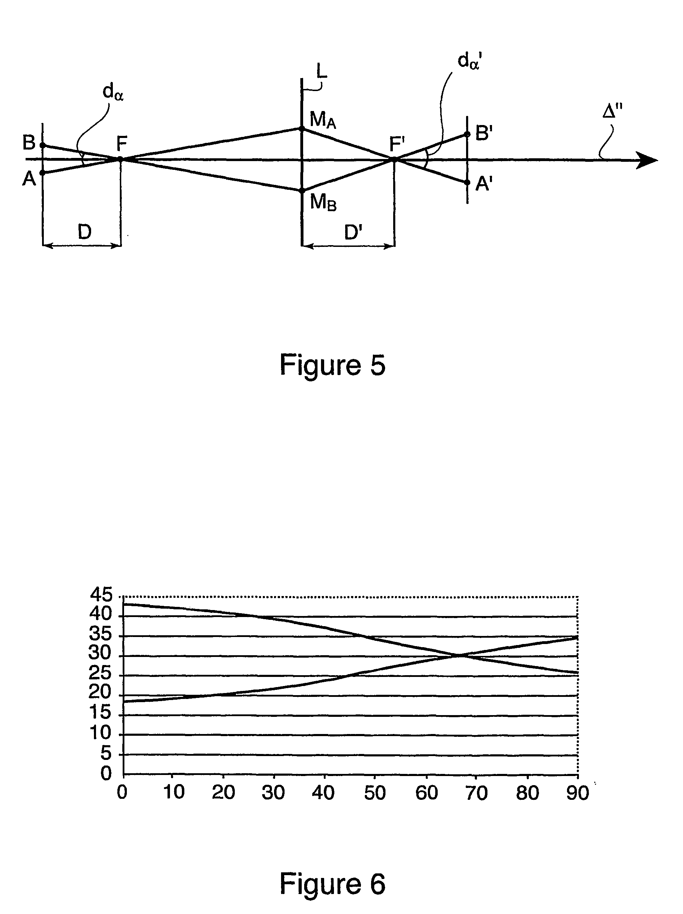

Dans l'exemple représenté sur la figure 5, la propagation des rayons est symbolisée par un axe de propagation Δ" contenant les foyers F, F' ; le tronçon d'ellipse E réfléchissant les rayons est symbolisé par un segment de droite L perpendiculaire à l'axe de propagation Δ" et situé entre les foyers F, F'.

Dans le cas d'un pixel donné d'un afficheur placé au voisinage du foyer F (foyer source), deux rayons issus de l'extrémité A, B, d'un pixel donné, sont situés à une distance D donnée en amont du foyer F. Ces rayons issus de l'extrémité A, B, d'un pixel, passent par le foyer F, et sont ensuite réfléchis par l'ellipse E, symbolisée par le segment de droite L, respectivement au voisinage des points $M_A$, $M_B$, puis passent par le foyer F', situé à une distance D' du segment de droite L, pour aboutir en deux points "images" A', B'. Ainsi, l'angle $d\alpha'$ au sommet F', contenu entre les deux droites $M_AA'$ et $M_BB'$ est fonction de la distance entre les deux points $M_A$, $M_B$ et de la distance D' qui sépare le segment de droite L et le foyer F' ; par ailleurs, la distance entre les points $M_A$, $M_B$ est fonction de la distance qui sépare les deux points A, B et la distance D qui sépare les points A, B et le foyer F :

- soit $d\alpha$ l'angle au sommet F, contenu entre les deux droites $M_AA$ et $M_BB$,
- soit dy la distance entre les deux points sources A, B,
- soit D la distance qui sépare les points sources A, B du foyer F,
- soit D' la distance qui sépare le segment de droite L du foyer F',
- soit $d\alpha'$ l'angle au sommet F', contenu entre les deux droites $M_AA'$ et $M_BB'$,
  en considérant les deux points sources A, B comme étant la largeur d'un pixel élémentaire d'un afficheur matriciel lumineux,
- l'angle d'ouverture $d\alpha$ d'un pixel est donné par la relation :

$$\tan d\alpha \approx d\alpha = dy/D$$

- l'angle $d\alpha'$ sous lequel est vu le pixel par l'oeil est donné par la relation :

$$\tan d\alpha' \approx d\alpha' = dy'/D'$$

A titre d'exemple numérique, un pixel de 25μm de diamètre, placé à une distance D de 50 mm du foyer F correspond à un angle d'ouverture voisin de 0,5 milliradian ; cette valeur est à rapprocher de l'acuité visuelle, proche de 0,3 milliradian, permettant de discerner un objet de 1 millimètre de diamètre à une distance de 4 mètres.

On supposera que l'ellipse E est caractérisée par :

- un demi grand axe de longueur *a* colinéaire avec l'axe Δ,
- un demi petit axe de longueur *b* colinéaire avec l'axe Δ,'
- l'abscisse des foyers F, F' sur l'axe Δ respectivement c et *-c.*

Par ailleurs :

- soit i un point source quelconque, le rayon correspondant passant par le foyer F sera réfléchi sur le dioptre sensiblement elliptique au point $M_i$ puis passera par le foyer F' pour donner un point image intermédiaire i',
- soit α l'angle, dit "angle de pointage", que fait la droite passant par les points i et F avec le grand axe Δ de l'ellipse E,
- soit $FM_i$ la longueur de la première demi-corde,
- soit $M_iF'$ la longueur de la deuxième demi-corde.

Les longueurs des demi-cordes $FM_i$ et $M_iF'$ sont définies par les relations suivantes :

$$FM_i = \frac{b^2|c|\sqrt{(1+\tan^2\alpha)} \pm ab^2(1+\tan^2\alpha)}{(b^2+a^2\tan^2\alpha)} \qquad (-\pi/2 \langle \alpha \langle \pi/2)$$

$$M_iF' = 2a - \frac{b^2|c|\sqrt{(1+\tan^2\alpha)} \pm ab^2(1+\tan^2\alpha)}{(b^2+a^2\tan^2\alpha)} \qquad (-\pi/2 \langle \alpha \langle \pi/2)$$

L'angle de pointage α peut varier de 0 à π/2 ; les longueurs des demi-cordes $FM_i$, $M_iF'$ varient en conséquence, leur somme $FMi + M_iF'$ restant constante, égale à 2*a*.

A titre d'exemple, on supposera :

- *a* = 30,46 mm,
- *b* = 28 mm,
- *c* = 12 mm,
- l'excentricité de l'ellipse, soit e = c/a = 0,39,
- α variant de 0 à π/2,

la longueur de la demi-corde $FM_i$ varie de 42,46 mm à 25,74 mm, et la longueur de la demi-corde $M_iF$ varie de 18,46 mm à 35,18 mm.

La figure 6 représente les variations desdites demi-cordes $FM_i$, $M_iF$.

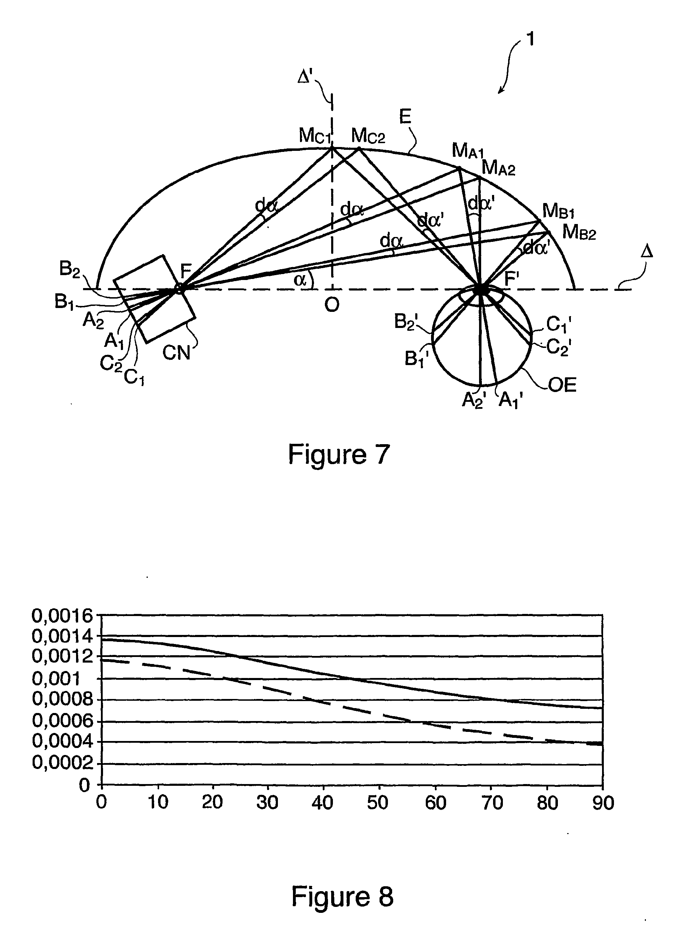

Dans l'exemple représenté sur la figure 7, le dispositif 1 selon l'invention est constitué :

- d'un dioptre sensiblement elliptique représenté par la demi ellipse E définie par son grand axe Δ, son petit axe Δ', son centre O, et ses deux foyers F, F' situés sur le grand axe Δ, de part et d'autre du centre O,
- d'une chambre noire CN, dont la pupille est située au voisinage du foyer F,
- d'un oeil OE, représenté schématiquement par un cercle et dont la pupille est située au voisinage du foyer F'.

Les faisceaux, issus de la chambre noire CN, traversent la pupille de ladite chambre noire CN, puis se réfléchissent sur la paroi concave du dioptre optique pour atteindre la rétine de l'oeil OE après avoir traversé la pupille dudit oeil OE ; six rayons symbolisent la trajectoire des susdits faisceaux, à savoir :

- le rayon $A_1M_{A1}A_1$' issu du point source $A_1$ de la chambre noire CN, se réfléchissant au voisinage du point $M_{A1}$ sur l'ellipse puis aboutissant au point image $A_1$' de la rétine de l'oeil OE,
- le rayon $A_2M_{A2}A_2$' issu du point source $A_2$ de la chambre noire CN, se réfléchissant au voisinage du point $M_{A2}$ sur l'ellipse puis aboutissant au point image $A_2$' de la rétine de l'oeil OE,
- le rayon $B_1M_{B1}B_1$' issu du point source $B_1$ de la chambre noire CN, se réfléchissant au voisinage du point $M_{B1}$ sur l'ellipse puis aboutissant au point image $B_1$' de la rétine de l'oeil OE,
- le rayon $B_2M_{B2}B_2$' issu du point source $B_2$ de la chambre noire CN, se réfléchissant au voisinage du point $M_{B2}$ sur l'ellipse puis aboutissant au point image $B_2$' de la rétine de l'oeil OE,
- le rayon $C_1M_{C1}C_1$' issu du point source $C_1$ de la chambre noire CN, se réfléchissant au voisinage du point $M_{C1}$ sur l'ellipse puis aboutissant au point image $C_1$' de la rétine de l'oeil OE,
- le rayon $C_2M_{C2}C_2$' issu du point source $C_2$ de la chambre noire CN, se réfléchissant au voisinage du point $M_{C2}$ sur l'ellipse puis aboutissant au point image $C_2$' de la rétine de l'oeil OE.

Soit :

- $A_1A_2$ la largeur du pixel A,
- $B_1B_2$ la largeur du pixel B,
- $C_1C_2$ la largeur du pixel C,
- $d\alpha$ l'angle d'ouverture du pixel correspondant,
- $\alpha$ l' angle de pointage correspondant aux rayons associés audit pixel.

Ainsi, l'angle $d\alpha$' vu de l'oeil à travers la pupille située au voisinage du foyer F' sera fonction de l'angle de pointage $\alpha$ ; l'angle $d\alpha$' diminue quand $\alpha$ varie de 0 à $\pi/2$.

A partir de l'exemple numérique cité précédemment, on constate que pour $\alpha$ compris entre 0˚ et 20˚, chaque pixel peut être vu par l'oeil comme un point de 1mm de rayon situé à une distance de 1 mètre ($d\alpha$'= 1 milliradian).

Pour $\alpha$ supérieur à 20˚, chaque pixel peut être vu par l'oeil comme un point de rayon inférieur à 1 mm situé à une distance de 1 mètre ($d\alpha$'< 1 milliradian).

La figure 8 représente la variation de l'angle $d\alpha$', exprimé en radian, en fonction de l'angle de pointage $\alpha$, exprimé en degré, dans le cas d'un faisceau lumineux collimaté de 25 $\mu$m de diamètre (courbe en trait plein), et dans le cas d'un sténopé de 25 $\mu$m de diamètre (courbe en trait pointillé).

Le champ de vision autorisé par le dioptre sensiblement elliptique est théoriquement de 180˚ ; néanmoins, ce champ de vision est limité, d'une part, par la pupille de l'oeil et, d'autre part, par l'agencement des composants constituant le dispositif.

On sait, par ailleurs, que le champ de vision horizontale de l'oeil est de 120˚ environ ; quant au champ de vision verticale de l'oeil, il est voisin de 60˚.

Ainsi qu'il a été décrit précédemment, le champ de vision peut atteindre 60˚ avec une résolution inférieure à 1 milliradian, l'angle de pointage devant être supérieur à 20˚.

L'angle d'ouverture $d\alpha$ d'un pixel est donné par la relation :

$$\tan d\alpha \approx d\alpha = dy/D$$

L'angle $d\alpha$' sous lequel est vu le pixel par l'oeil est donné par la relation :

$$\tan d\alpha' \approx d\alpha' = dy'/D'$$

On constate que le rapport $d\alpha'/d\alpha$ n'est pas constant en fonction de l'angle de pointage $\alpha$ ; par ailleurs, ce rapport est supérieur à 1 ; en d'autres termes, le dioptre sensiblement elliptique provoque un effet de grossissement variable en fonction de l'angle de pointage.

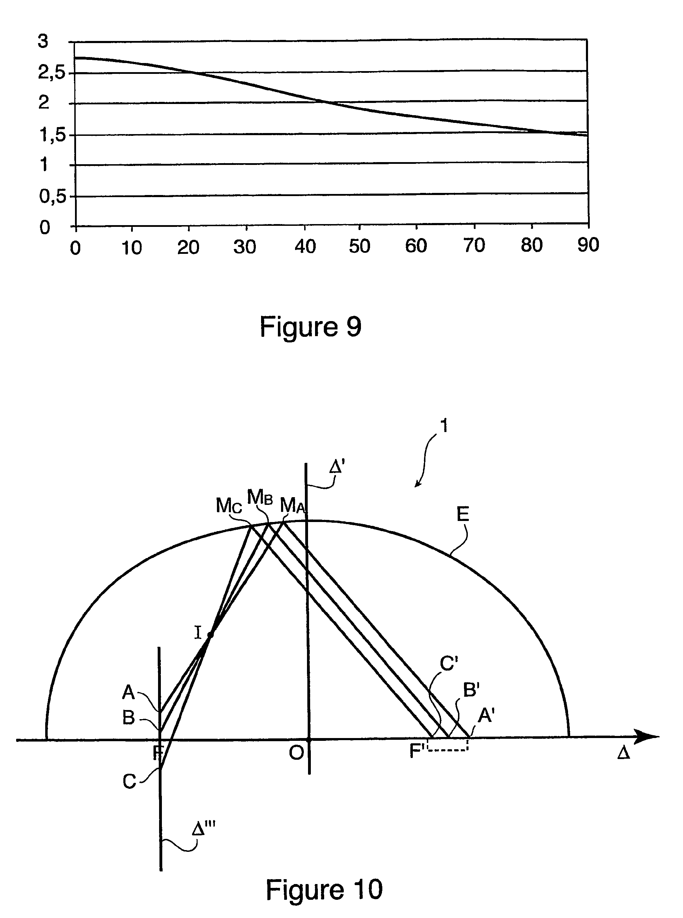

Ceci est représenté par la figure 9 indiquant la variation du rapport $d\alpha'/d\alpha$ ; l'angle de pointage $\alpha$ variant de 0 à $\pi/2$, le rapport $d\alpha'/d\alpha$ varie de 2,7 à 1,4.

En conséquence, les pixels situés en bordure de l'afficheur lumineux paraîtront plus grands que ceux situés au centre dudit afficheur lumineux ; il s'agit en l'occurrence d'un effet de distorsion provoqué par le dioptre sensiblement elliptique.

Diverses solutions sont envisageables :

- la compression de l'image source suivant une fonction mathématique réciproque à l'aide d'un procédé informatique,
- l'inclinaison de l'image source de manière à ce que les pixels situés en bordure soient vus sous un angle plus faible que ceux situés à l'extrémité opposée,
- l'implantation d'un système optique générant une aberration de distorsion inverse, de manière à compenser la distorsion provoquée par le dioptre sensiblement elliptique.

Par ailleurs, on constate que les rayons lumineux traversant la pupille de l'oeil ne sont pas rigoureusement parallèles ; une légère convergence dans l'exemple numérique précédemment cité, est voisine de 0,5 milliradian ; ceci a pour effet de fatiguer l'oeil durant une observation prolongée sachant que l'accommodation naturelle de l'oeil s'effectue pour un objet situé à l'infini.

Selon l'invention, une configuration optique consistant à générer pour chaque point objet un faisceau plus large constitué de rayons dont l'angle de pointage est tel que les rayons convergent en un point unique, puis sont réfléchis sur le dioptre sensiblement elliptique E avant d'aboutir en rayons parallèles au voisinage du deuxième foyer F'.

Cette configuration permet, d'une part, de moins fatiguer l'oeil et, d'autre part, d'améliorer le contraste étant donné qu'à chaque point objet correspond non pas un rayon unique mais un tronçon de rayons plus large.

Dans l'exemple représenté sur la figure 10, le dispositif 1 selon l'invention est constitué d'un dioptre sensiblement elliptique représenté par la demi ellipse E définie par son grand axe $\Delta$, son petit axe A', son centre O, et ses deux foyers F, F' situés sur le grand axe $\Delta$, de part et d'autre du centre O.

La chambre noire et l'oeil sont disposés d'une manière identique à celle proposée dans les configurations précédentes, mais ne sont pas représentés.

Trois rayons symbolisent la trajectoire du faisceau associé à un point source ils sont issus de trois points A, B, C, situés sur un axe $\Delta$''', perpendiculaire à l'axe $\Delta$ et passant par le premier foyer F :

- le rayon $AM_AA'$ issu du point A, se réfléchissant au voisinage du point $M_A$ sur l'ellipse puis aboutissant au point A' situé sur l'axe $\Delta$, proche du second foyer F',
- le rayon $BM_BB'$ issu du point B, se réfléchissant au voisinage du point $M_B$ sur l'ellipse puis aboutissant au point B' situé sur l'axe $\Delta$, proche du second foyer F',
- le rayon $CM_CC'$ issu du point C, se réfléchissant au voisinage du point $M_C$ sur l'ellipse puis aboutissant au point C' situé sur l'axe $\Delta$, proche du second foyer F'.

On remarquera que les trois rayons réfléchis $M_AA'$, $M_BB'$, $M_CC'$ sont parallèles, ce qui autorise le déplacement de la pupille de l'oeil sans perte de champ de vision.

Ce résultat est obtenu en faisant converger les trois rayons incidents $AM_A$, $BM_B$, $CM_C$ en un même point I situé dans l'espace défini par la droite $\Delta$''' et l'ellipse E.

Ainsi, en faisant converger chaque point source de l'afficheur lumineux sur des points de convergence suivant une certaine courbe, on réalise en quelque sorte une "distorsion inverse" des points source à celle qu'engendre intrinsèquement le dioptre sensiblement elliptique.

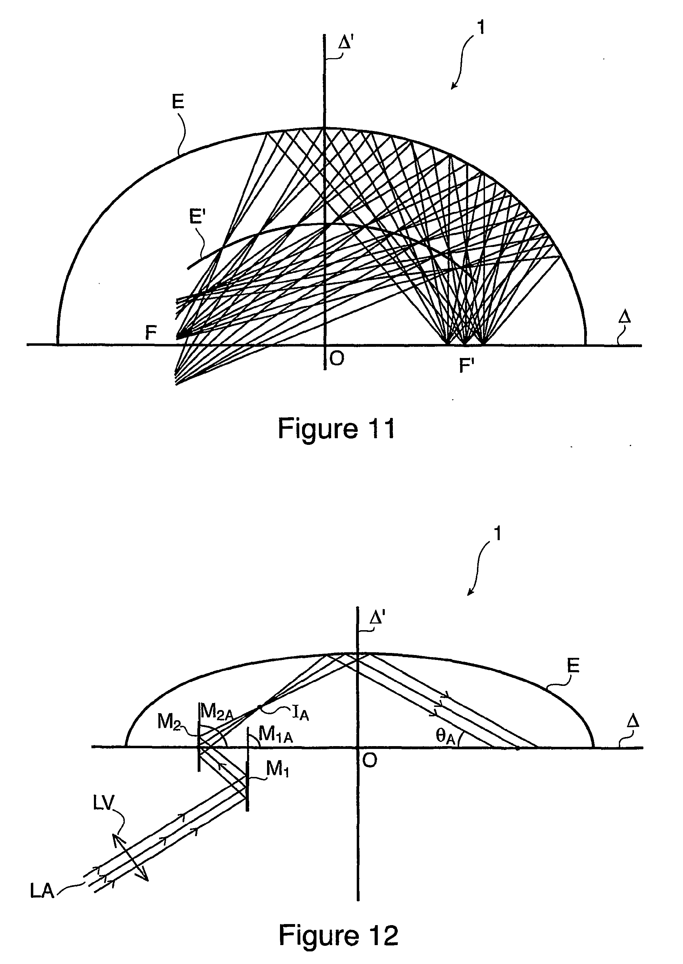

Dans l'exemple représenté sur la figure 11, chaque faisceau issu d'un point source doit tout d'abord converger vers un point de convergence qui lui est propre avant de se réfléchir sur le dioptre sensiblement elliptique ; ceci est en effet la condition nécessaire et suffisante pour obtenir des faisceaux parallèles entrant dans la pupille de l'oeil pour chacun des points sources.

L'ensemble des différents points de convergence suit une courbe E'.

Par ailleurs, on peut constater que l'angle d'ouverture des faisceaux au voisinage de la susdite courbe E' est constant ; par conséquent, dans le cas de la troisième version, décrite précédemment, comprenant un laser, il est possible d'associer au faisceau émis par ledit laser un système de balayage et une lentille convergente à focale variable et ainsi de faire converger le faisceau émis par le laser vers le susdit point de convergence qui est associé à chaque point de l'image portée par le balayage dudit faisceau.

Avantageusement, le susdit système de balayage, associé à lentille convergente à focale variable, peut être constitué de deux miroirs à balayage galvanométrique.

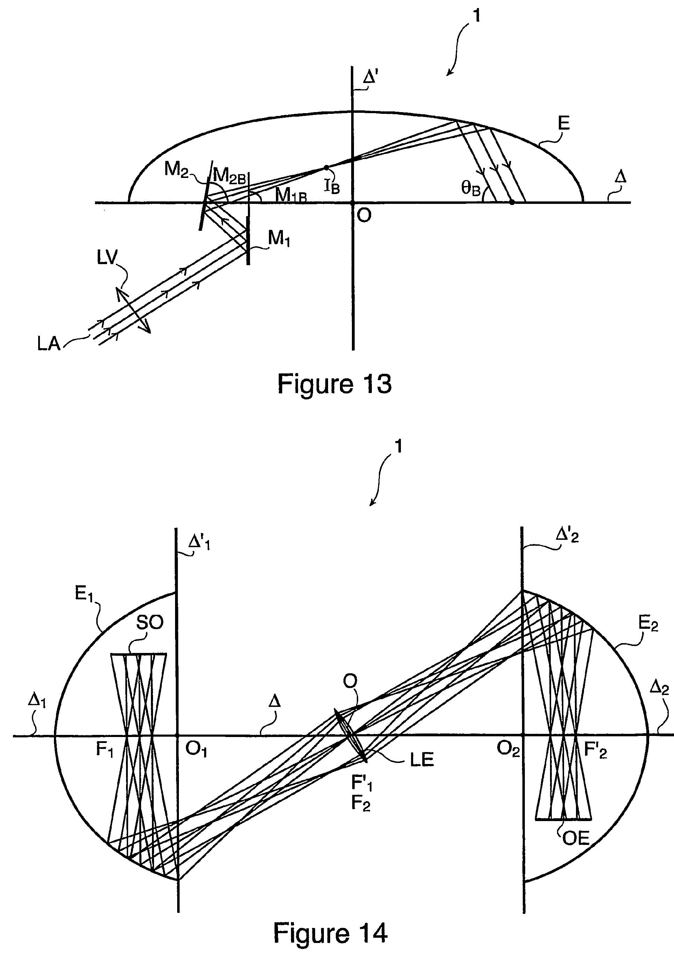

Dans l'exemple représenté sur les figures 12, 13, un mode de réalisation est proposé concernant la première solution, décrite précédemment, corrigeant la distorsion optique, respectivement pour un premier point du champ et un second point du champ.

Comme indiqué sur les figures 12, 13, la source laser LA collimaté est suivie d'une lentille à focale variable LV et de deux miroirs $M_1$, $M_2$, à balayage galvanométrique.

Dans l'exemple représenté sur la figure 12, pour un point A du champ, lesdits miroirs $M_1$, $M_2$, sont positionnés

angulairement selon respectivement les angles $M_{1A}$, $M_{2A}$ (définis selon le sens trigonométrique par rapport au grand axe $\Delta$) ; par ailleurs, la focale $F_A$ de la lentille à focale variable LV est telle que les rayons du faisceau laser, après réflexion sur les deux miroirs $M_1$, $M_2$, focalisent en un point $I_A$, puis, après réflexion sur le dioptre sensiblement elliptique E, aboutissent collimatés à proximité de l'oeil avec un angle $\theta_A$ correspondant au susdit point A dans le champ.

Dans l'exemple représenté sur la figure 13, pour un point B du champ, lesdits miroirs $M_1$, $M_2$, sont positionnés angulairement selon respectivement les angles $M_{1B}$, $M_{2B}$ (définis selon le sens trigonométrique par rapport au grand axe $\Delta$) ; par ailleurs, la focale $F_B$ de la lentille à focale variable LV est telle que les rayons du faisceau laser, après réflexion sur les deux miroirs $M_1$, $M_2$, focalisent en un point $I_B$, puis, après réflexion sur le dioptre sensiblement elliptique E, aboutissent collimatés à proximité de l'oeil avec un angle $\theta_B$ correspondant au susdit point B dans le champ.

Ainsi, chaque point i de l'image est décrit par un triplet de tensions ($V_{LVi}$, $V_{M1i}$, $V_{M2i}$) correspondant respectivement aux tensions électriques appliquées sur la lentille à focale variable LV et sur les miroirs $M_1$, $M_2$, à balayage galvanométrique.

Cette solution, utilisant un système à focale variable, (à partir de lentille existante de 8 mm de diamètre, par exemple) et deux miroirs à balayage galvanométrique, constitue une première solution permettant de supprimer la convergence des rayons traversant la pupille de l'oeil.

Une seconde solution, permettant de supprimer cette distorsion, consiste à introduire dans le trajet des rayons une seconde distorsion rigoureusement inverse en utilisant un second dioptre sensiblement elliptique identique au premier.

Dans l'exemple représenté sur la figure 14, le dispositif 1 selon l'invention est constitué :

- de deux dioptres sensiblement elliptiques $E_1$, $E_2$, disposés imbriqués, dont les grands axes $\Delta_1$, $\Delta_2$ sont colinéaires, deux de leurs foyers sont confondus en un même point O, les deux autres foyers, respectivement $F_1$, $F'_2$, sont équidistants de part et d'autre dudit point O,
- d'une lentille convergente LE située au voisinage du point O,
- une source lumineuse SO constituée d'un laser associé à un système à balayage, situé dans le premier dioptre sensiblement elliptique $E_1$, ou d'un afficheur lumineux collimaté,
- l'oeil, situé dans le deuxième dioptre sensiblement elliptique $E_2$.

Les rayons émis par la source lumineuse SO convergent après réflexion sur le premier dioptre sensiblement elliptique E1, puis sont dirigés vers la lentille LE. Cette lentille LE assure un grandissement transversal égal à -1 dans l'exemple cité et fait converger les faisceaux avant réflexion sur le second dioptre sensiblement elliptique $E_2$ pour aboutir enfin au voisinage de l'oeil OE sous forme de rayons parallèles associés à chaque point image, après réflexion sur le second dioptre sensiblement elliptique $E_2$.

Il est à noter que dans le cas où le second dioptre optique est rigoureusement identique au premier dioptre optique, la lentille LE doit permettre un grandissement transversal égal à -1.

Cependant, pour réduire l'encombrement de l'ensemble du dispositif selon l'invention, on peut choisir un second dioptre optique plus petit que le premier dioptre optique, auquel cas on adaptera le grandissement transversal de la lentille LE.

D'autres configurations sont envisageables pour obtenir une focalisation des différents "points objets" suivant la courbure spécifique décrite précédemment, avant la réflexion effective sur le dioptre sensiblement elliptique.

Ces configurations peuvent constituer en l'implantation :

- d'un miroir sphérique hors axe et d'un groupe de lentilles,
- d'un ou plusieurs groupes de lentilles sphériques ou asphériques,
- d'un corps prismatique et d'un groupe de lentilles,
- d'une matrice de micro-lentilles et d'un corps prismatique,
- d'une fibre optique et d'un groupe de lentilles,
- d'éléments optiques dans lesquels des réseaux de diffraction (réseau blazé) ou des réseaux holographiques ("HOE : Holographique Optical Elements").

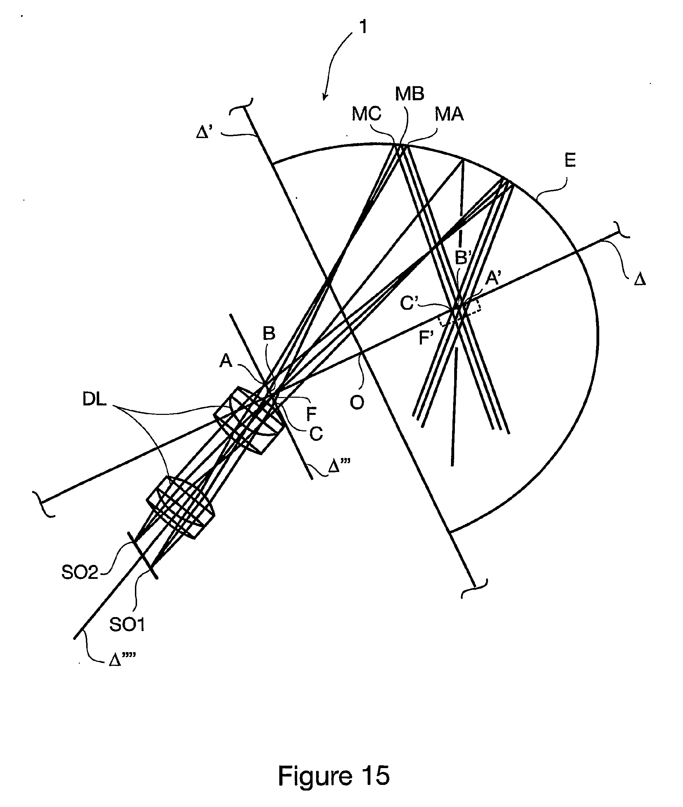

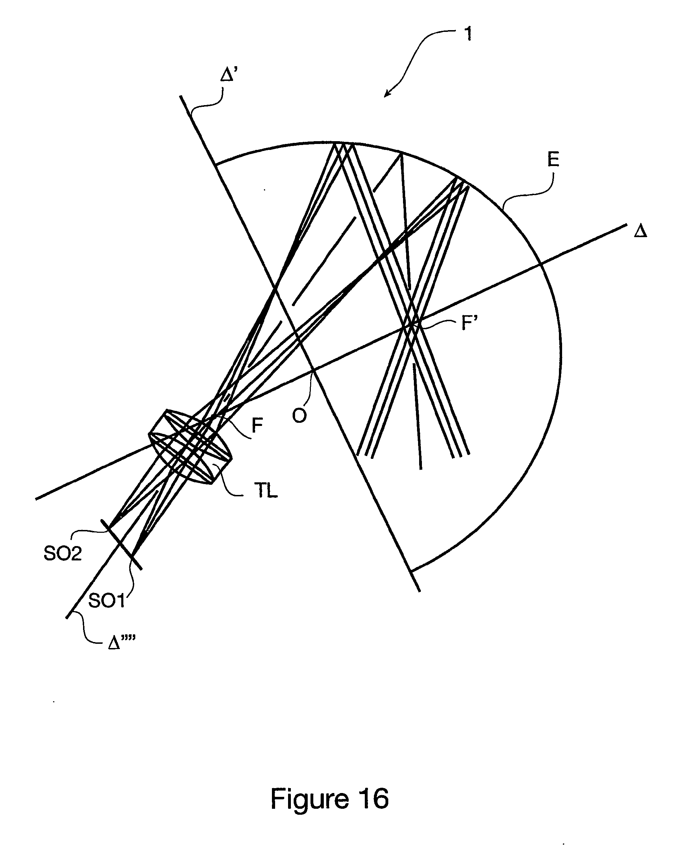

Dans les exemples représentés sur les figures 15, 16, le dispositif 1 selon l'invention, permet d'obtenir des rayons parallèles entrant dans la pupille de l'oeil pour chacun des points sources comme indiqué sur les figures 10, 11.

Le dispositif est constitué:

- d'un dioptre sensiblement elliptique représenté par la demi ellipse E définie par son grand axe $\Delta$, son petit axe $\Delta'$, son centre O, et ses deux foyers F, F' situés sur le grand axe $\Delta$, de part et d'autre du centre O.
- le foyer dit "source", constitué ici par un afficheur lumineux et un ou plusieurs groupes de lentilles alignés suivant l'axe $\Delta''$, est positionné au voisinage du premier foyer F dudit dioptre sensiblement elliptique E de telle sorte que les rayons arrivent parallèles au voisinage du second foyer F' dudit dioptre sensiblement elliptique E où est positionné le centre de l'oeil OE de l'observateur.

Ce mode de réalisation, utilisant un ou plusieurs groupes de lentilles, présente l'avantage d'une configuration optique plus aisée à réaliser techniquement tout en permettant d'obtenir des faisceaux parallèles entrant dans la pupille de l'oeil pour chacun des points sources avec une correction des aberrations optiques.
Dans l'exemple représenté sur la figure 15, où deux groupes de lentilles DL sont utilisées , la trajectoire de chacun des deux faisceaux est symbolisée par trois rayons, et chacun des faisceaux étant associés à un point source SO1, SO2.
Dans le cas d'un seul faisceau, ses trois rayons sont issus de trois points A, B, C, situés sur un axe $\Delta'''$, perpendiculaire à l'axe $\Delta$ et passent par le premier foyer F :

- le rayon $AM_AA'$ issu du point A, se réfléchit au voisinage du point $M_A$ sur l'ellipse puis aboutit au point A' situé sur l'axe $\Delta$, proche du second foyer F',
- le rayon $BM_BB'$ issu du point B, se réfléchit au voisinage du point $M_B$ sur l'ellipse puis aboutit au point B' situé sur l'axe $\Delta$, proche du second foyer F',
- le rayon $CM_CC'$ issu du point C, se réfléchit au voisinage du point $M_C$ sur l'ellipse puis aboutit au point C' situé sur l'axe A, proche du second foyer F'.

Les trois rayons réfléchis $M_AA'$, $M_BB'$, $M_CC'$ sont parallèles.
Ici, on notera que :

- les points A, B, C sont issus d'un même point source SO1 de l'afficheur lumineux,
- que ledit afficheur lumineux étant disposé sur l'axe optique peut être incliné d'un angle $\alpha$,
- chaque point source SO1, SO2, émet un faisceau lumineux,
- que tous les rayons principaux ou centraux se croisent au voisinage du foyer F et au voisinage du foyer F'.

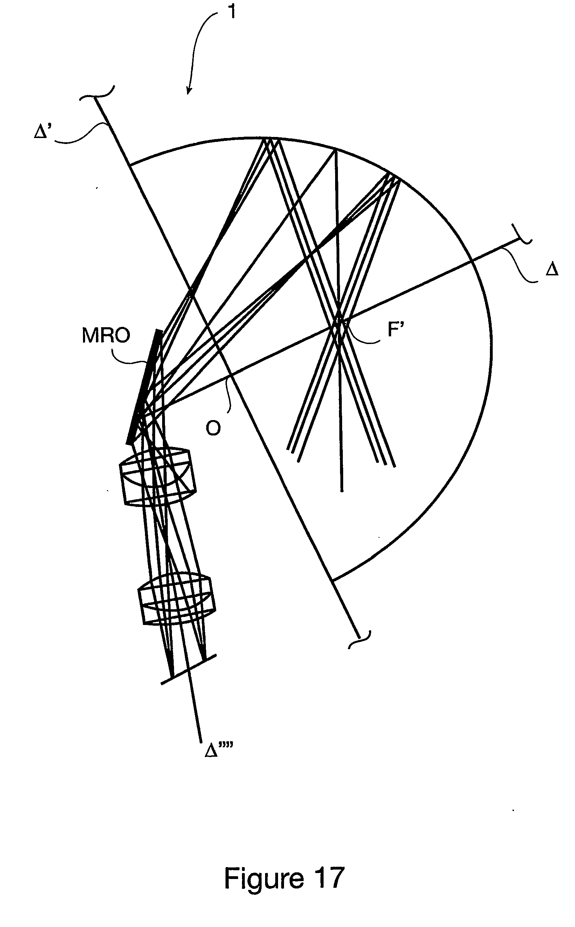

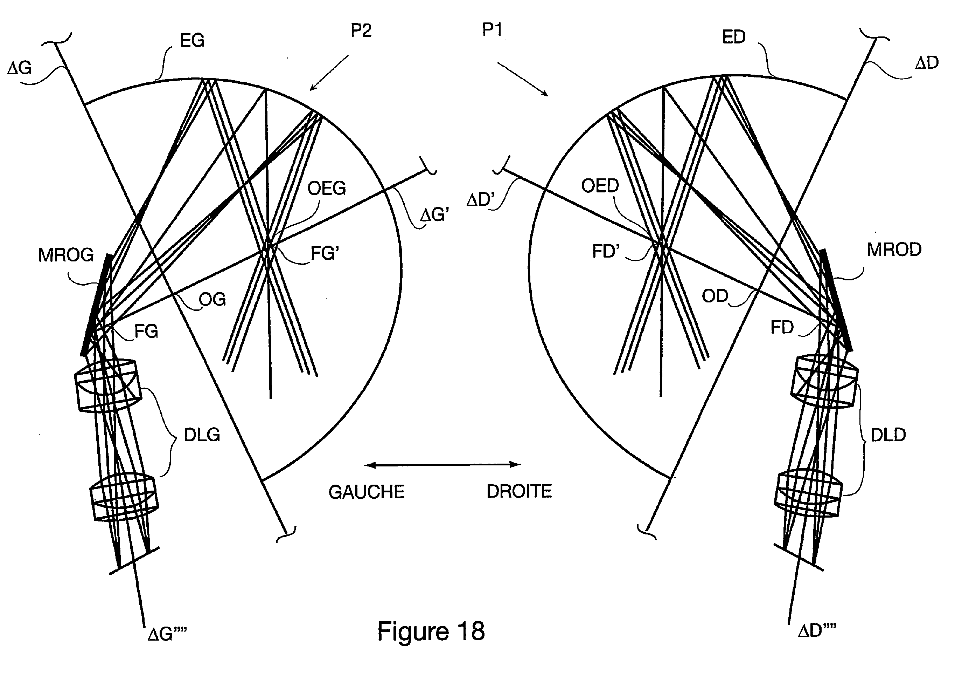

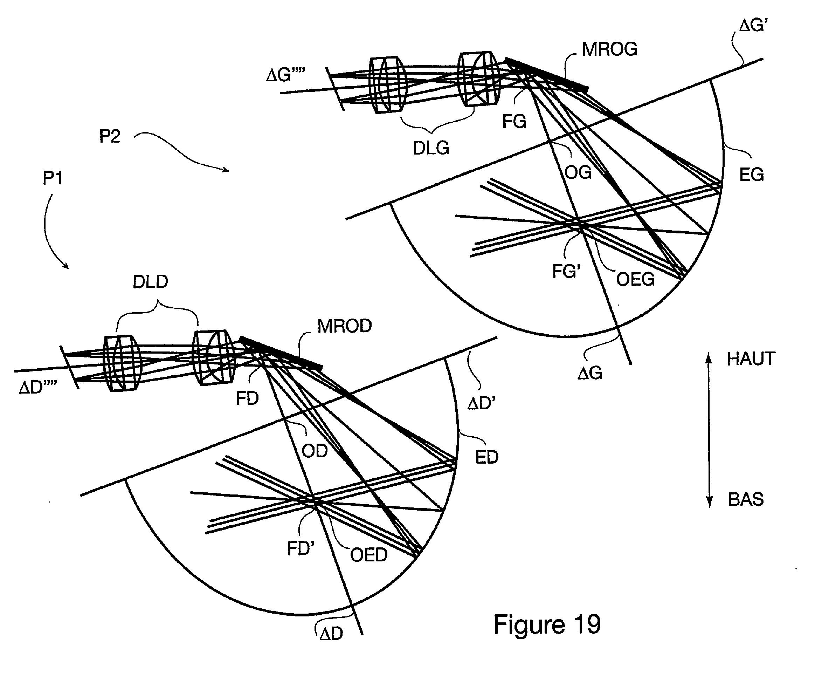

Dans l'exemple représenté sur la figure 16, le dispositif 1, selon l'invention est constitué d'une manière identique à celui représenté sur la figure 15, hormis la présence d'un seul groupe de lentilles TL en lieu et place des deux groupes de lentilles DL.
Dans l'exemple représenté sur la figure 17, afin de rendre le dispositif 1 selon l'invention moins encombrant dans l'espace, un miroir de réflexion optique MRO est inséré sur le chemin optique au voisinage du foyer (F), de manière à pouvoir décaler de l'axe $\Delta''''$, l'alignement du ou des groupes de lentilles et l'afficheur selon un angle choisi.
Dans le cas présent, il s'agit d'un mode de réalisation dérivé du dispositif 1 selon l'invention représenté sur la figure 15 et précédemment décrit.
Ainsi, l'exploitation du stigmatisme propre aux deux foyers d'une ellipse, permet la réalisation d'un système optique monoculaire ou stéréoscopique autorisant la création d'images rétiniennes ; ledit système optique proposé permet la visualisation, par la rétine de l'oeil, de réalités virtuelles, telles des images issues d'un afficheur matriciel lumineux ou portées par un système laser à balayage ; par ailleurs, le système optique permet la visualisation, par la rétine de l'oeil, de réalités augmentées compte tenu des caractéristiques de transparence et de semi réflexion du dioptre optique.
Bien entendu, les sections des dioptres optiques, tels que décrits précédemment, pourront être de forme circulaire, ou sensiblement circulaire, lesdites sections étant définies en fonction du meilleur confort de visualisation des susdites réalités augmentées ou virtuelles.
Dans les exemples représentés sur les figures 18, 19, un développement possible de quelques modes de réalisation selon l'invention est représenté, permettant de réaliser un système de visualisation plus complet.
Ce développement repose sur l'exploitation des miroirs de réflexion optique MRO, précédemment décrits.
Le dispositif est constitué :

- de deux dioptres sensiblement elliptiques disposés l'un à côté de l'autre, représentés par leur demi ellipse respective, ED ou EG, définies chacune par leur grand axe respectif $\Delta D$ ou $\Delta G$, leur petit axe respectif $\Delta D'$ ou $\Delta G'$, et leurs deux foyers respectifs FD, FD', ou FG, FG' situés sur leur grand axe respectif $\Delta D$ ou $\Delta G$, de part et d'autre de leur centre respectif OD, ou OG,
- d'un foyer dit "source", constitué dans ce cas, respectivement dioptre ED ou EG, par un afficheur lumineux, un miroir respectif, MROD OU MROG, un groupe de lentilles DLD ou DLG alignés suivant l'axe respectif $\Delta D''''$ ou $\Delta G''''$, est positionné respectivement au voisinage du premier foyer FD ou FG dudit dioptre sensiblement elliptique ED ou EG, de telle sorte que les rayons arrivent parallèles au voisinage du second foyer FD' ou FG' dudit dioptre sensiblement elliptique respectif ED ou EG où est positionné le centre de l'oeil droit OED ou le centre de l'oeil gauche OEG de l'observateur.

Ce développement offre la possibilité d'étendre le champ des capacités du procédé selon l'invention, dans le cadre d'une visualisation binoculaire ou stéréoscopique.

Avantageusement, on constate que :

- dans l'exemple représenté sur la figure 18, les dispositifs P1, P2 sont positionnés tous deux:

les foyers FD, FD', FG, FG' situés sur le même plan géométrique,
les foyers FD, FG sont situés à l'extérieur et les foyers FD', FG' sont situés à l'intérieur, en d'autres termes, les dispositifs P1, P2 sont positionnés de manière symétrique,

- dans l'exemple représenté sur la figure 19, les dispositifs P1, P2 sont positionnés tous deux :

l'alignement des foyers FD, FG, situé parallèlement à l'alignement des foyers FD', FG', en d'autres termes, l'axe $\Delta$D est parallèle à l'axe $\Delta$G,
les dits alignements des foyers FD, FG, et des foyers FD', FG', sont positionnés "haut ; bas", en d'autres termes, les foyers FD, FG, sont positionnés vers le haut et les foyers FD', FG', sont positionnés vers le bas,

de telle sorte que les oculaires OED, OEG, soient positionnés dans le voisinage de leur foyer respectif FD' ou FG'.

Dans le cadre d'une utilisation normale de dispositifs, tels que décrits précédemment, il est souhaitable de tenir compte de tout l'éventail des utilisateurs possibles.

Sachant qu'un certain nombre d'utilisateurs potentiels portent des lunettes de correction optique due à une déficience naturelle de leur propre système oculaire, il est possible d'intégrer dans les dispositifs tels que décrits précédemment, des moyens de correction optique personnalisables en fonction de chaque utilisateur.

Avantageusement, pour une meilleure réduction de l'encombrement, lesdits moyens de correction optique peuvent être placés au plus près des oculaires OED, OEG, en associant à chaque monture des dispositifs P1, P2, une branche rigide, ladite branche rigide étant associée à la monture portant les moyens de correction optique.

Compte tenu que les utilisateurs potentiels présentent des différences de nature optique dans leur propre système oculaire ainsi que des différences de morphologie, comme la distance inter pupillaire ou la forme céphalique par exemple, il est préférable de pouvoir intégrer dans les dispositifs tels que décrits précédemment, des moyens de réglage optiques personnalisables.

**Revendications**

1. Procédé pour la création d'images rétiniennes utilisant le stigmatisme des deux foyers (F, F') d'un dioptre sensiblement elliptique (E) comportant une surface semi réfléchissante, comprenant des étapes pour effectuer :

• un positionnement au voisinage du premier foyer (F) dudit dioptre sensiblement elliptique (E) d'un afficheur lumineux dont chaque point objet génère un faisceau qui est réfléchi sur ledit dioptre sensiblement elliptique (E),
• positionnement au voisinage du second foyer (F') dudit dioptre sensiblement elliptique (E), d'un foyer dit "image" constitué par la pupille ou le centre de l'oeil (OE) de l'observateur,
• une projection au voisinage de la rétine de l'oeil de l'observateur de l'image générée par ledit afficheur lumineux ou par ladite source lumineuse, et réfléchie par la surface semi réfléchissante dudit dioptre sensiblement elliptique (E), le

le procédé comprenant en outre l'étape consistant à rendre convergent, avant réflexion sur la surface semi-réfléchissante, au moyen d'un dispositif optique, ledit faisceau généré par chacun des points dudit afficheur lumineux, de façon à obtenir, après réflexion sur ledit dioptre sensiblement elliptique (E), un faisceau de rayons sensiblement parallèles qui sont centrés sur la pupille dudit observateur, ledit dispositif optique assurant une convergence spécifique pour chaque point dudit afficheur lumineux, **caractérisé en ce que** la susdite image générée par l'afficheur lumineux est légèrement inclinée de manière à ce que les pixels situés en bordure soient vus sous un angle plus faible que ceux situés à l'extrémité opposée pour diminuer la distorsion provoquée par le susdit dioptre sensiblement elliptique (E).

2. Procédé selon la revendication 1,
**caractérisé en ce que** la susdite image générée par l'afficheur lumineux est compressée suivant une fonction mathématique réciproque à la distorsion provoquée par le susdit dioptre sensiblement elliptique (E).

3. Procédé selon la revendication 1,
**caractérisé en ce qu'**il comprend un système optique générant une distorsion inverse de manière à compenser la distorsion provoquée par le susdit dioptre sensiblement elliptique (E).

4. Dispositif pour la mise en oeuvre du procédé selon la revendication 1, comprenant:

• un dioptre sensiblement elliptique (E) ayant un premier foyer (F), un deuxième foyer (F') et une surface semi réfléchissante,
• un foyer dit "source" constitué par un afficheur lumineux dont chaque point objet génère un faisceau, ledit foyer source étant positionné au voisinage du premier foyer (F) dudit dioptre sensiblement elliptique (E),
• un dispositif optique prévu pour faire converger ledit faisceau, avant réflexion sur la surface semi réfléchissante dudit dioptre sensiblement elliptique, de sorte que ledit faisceau est parallèle au voisinage du deuxième foyer (F'), et,
• des moyens pour positionner un foyer dit "image", constitué par la pupille ou le centre de l'oeil (OE) de l'observateur, au voisinage du second foyer (F') dudit dioptre sensiblement elliptique (E),
**caractérisé en ce que** l'afficheur lumineux est légèrement incliné de manière à ce que les pixels situés en bordure soient vus sous un angle plus faible que ceux situés à l'extrémité opposée pour diminuer la distorsion provoquée par le susdit dioptre sensiblement elliptique (E).

5. Dispositif selon la revendication 4,
**caractérisé en ce qu'**il comprend des moyens de correction optique adaptés au système oculaire de l'utilisateur.

6. Dispositif selon la revendication 5,
**caractérisé en ce que** les susdits moyens de correction optique adaptés au système oculaire de l'utilisateur sont réglables.

## Claims

1. A method for generating retinal images using the stigmatism of two foci (F, F') of a substantially elliptical sight (E) with a semi-reflective surface, comprising steps for carrying out:

• positioning, in the vicinity of said first focus (F) of said substantially elliptical sight (E), a light-emitting display whereof each object point generates a beam that is reflected on said substantially elliptical sight (E),
• positioning, in the vicinity of said second focus (F') of said substantially elliptical sight (E), a so-called image focus formed by the pupil or center of the user's eye (OE),
• projecting, in the vicinity of the retina of the observer's eye, the image generated by said light-emitting display or by said light source, and reflected by the semi-reflective surface of said substantially elliptical sight (E), the method also comprising the step of making, before reflection on the semi-reflective surface, using an optical device, said beam generated by each of the points of said light-emitting display convergent so as to obtain, after reflection on said substantially elliptical sight (E), a bundle of substantially parallel rays centered on said observer's pupil, said optical device ensuring a specific convergence for each point of said light-emitting display,
**characterized in that** the aforementioned image generated by the light-emitting display is slightly inclined such that the pixels situated on the edge are seen at a smaller angle than those situated at the opposite end to decrease the distortion caused by the aforementioned substantially elliptical sight (E).

2. The method according to claim 1,
**characterized in that** said image generated by the light-emitting display is compressed using a mathematical function reciprocal to the distortion caused by said substantially elliptical sight (E).

3. The method according to claim 1,
**characterized in that** it comprises an optical system generating an inverse distortion so as to offset the distortion caused by said substantially elliptical sight (E).

4. A device for implementing the method according to claim 1, comprising:

• a substantially elliptical sight (E) having a first focus (F), a second focus (F') and a semi-reflective surface,
• a so-called source focus made up of a light-emitting display whereof each object point generates a beam, said source focus being positioned in the vicinity of the first focus (F) of said substantially elliptical sight (E), an optical device provided to make said beam converge, before reflection on the semi-reflective surface of said substantially elliptical sight, such that said beam is parallel in the vicinity of the second focus (F'), and
• means for positioning a so-called image focus, made up of the pupil or center of the observer's eye (OE), in the vicinity of the second focus (F') of said substantially elliptical sight (E),
**characterized in that** the light-emitting display is slightly inclined such that the pixels situated on the edge are seen at a smaller angle than those situated at the opposite end to decrease the distortion caused by the aforementioned substantially elliptical sight (E).

5. The device according to claim 4,
**characterized in that** it comprises optical correction means adapted to the user's ocular system.

6. The device according to claim 5,
**characterized in that** said optical correction means adapted to the user's ocular system are adjustable.

## Patentansprüche

1. Verfahren zur Erzeugung von Retinabildern unter Verwendung des Astigmatismus der beiden Brennpunkte (F, F') einer im Wesentlichen elliptischen Sichtvorrichtung (E), die eine semireflektierende Oberfläche einschließt, umfassend Schritte, um folgendes zu bewirken:

• eine Positionierung in der Nachbarschaft des ersten Brennpunkts (F) der im Wesentlichen elliptischen Sichtvorrichtung (E) einer Leuchtanzeige, wovon jedes Punktobjekt einen Strahl erzeugt, der an der im Wesentlichen elliptischen Sichtvorrichtung (E) reflektiert wird,
• eine Positionierung in der Nachbarschaft des zweiten Brennpunkts (F') der im Wesentlichen elliptischen Sichtvorrichtung (E) eines Brennpunkts, der "Bild" genannt wird, bestehend aus der Pupille oder dem Mittelpunkt des Auges (OE) des Beobachters,
• eine Projektion in der Nachbarschaft der Retina des Auges des Beobachters des Bildes, das durch die Leuchtanzeige oder durch die Lichtquelle erzeugt und durch die semireflektierende Oberfläche der im Wesentlichen elliptischen Sichtvorrichtung (E) reflektiert wird,

wobei das Verfahren weiterhin den Schritt umfasst, bestehend aus dem Konvergentmachen vor der Reflexion auf der halbreflektierenden Oberfläche des durch jeden der Punkte der Leuchtanzeige erzeugten Strahles mittels einer optischen Vorrichtung, derart, dass nach der Reflexion an der im Wesentlichen elliptischen Sichtvorrichtung (E) ein Strahl von im Wesentlichen parallelen Stahlen erhalten wird, die auf der Pupille des Beobachter zentriert werden, wobei die optische Vorrichtung eine spezifische Konvergenz für jeden Punkt der Leuchtanzeige sicherstellt, **dadurch gekennzeichnet, dass** das oben genannte durch die Leuchtanzeige erzeugte Bild leicht geneigt ist, derart dass die am Rand gelegenen Pixel unter einem Winkel betrachtet werden, der kleiner ist als diejenigen, die am gegenüberliegenden Ende liegen, um die durch die oben genannte im Wesentlichen elliptische Sichtvorrichtung (E) hervorgerufene Verzerrung zu vermindern.

2. Verfahren nach Anspruch 1,
**dadurch gekennzeichnet, dass** das oben genannte durch die Leuchtanzeige erzeugte Bild gemäß einer mathematischen Funktion, die zu der durch die oben genannte im Wesentlichen elliptische Sichtvorrichtung (E) hervorgerufene Verzerrung reziprok ist, komprimiert wird.

3. Verfahren nach Anspruch 1,
**dadurch gekennzeichnet, dass** es ein optisches System umfasst, das eine umgekehrte Verzerrung erzeugt, derart, dass die durch die oben genannte im Wesentlichen elliptische Sichtvorrichtung (E) hervorgerufene Verzerrung kompensiert wird.

4. Vorrichtung zur Durchführung des Verfahrens nach Anspruch 1,
umfassend:

• eine im Wesentlichen elliptische Sichtvorrichtung (E) mit einem ersten Brennpunkt (F), einem zweiten Brennpunkt (F') und einer semireflektierenden Oberfläche,

• einen Brennpunkt, der "Quelle" genannt wird, bestehend aus einer Leuchtanzeige, wovon jedes Punktobjekt einen Strahl erzeugt, wobei der Quell-Brennpunkt in der Nachbarschaft des ersten Brennpunkts (F) der im Wesentlichen elliptischen Sichtvorrichtung (E) positioniert ist,

• eine optische Vorrichtung, die vorgesehen ist, um den Strahl vor der Reflexion auf der semireflektierenden Oberfläche der im Wesentlichen elliptischen Sichtvorrichtung konvergieren zu lassen, derart, dass der Strahl in der Nachbarschaft des zweiten Brennpunkts (F') parallel ist, und

• Mittel zur Positionierung eines Brennpunkts, der "Bild" genannt wird, bestehend aus der Pupille oder dem Mittelpunkt des Auges (OE) des Betrachters, in der Nachbarschaft des zweiten Brennpunkts (F') der im Wesentlichen elliptischen Sichtvorrichtung (E) ,

**dadurch gekennzeichnet, dass** die Leuchtanzeige leicht geneigt ist, derart, dass die am Rand gelegenen Pixel unter einem Winkel betrachtet werden, der kleiner ist als diejenigen, die am gegenüberliegenden Ende liegen, um die durch die oben genannte im Wesentlichen elliptische Sichtvorrichtung (E) hervorgerufene Verzerrung zu vermindern.

5. Vorrichtung nach Anspruch 4,
**dadurch gekennzeichnet, dass** sie Mittel zur optischen Korrektur umfasst, die an das Okularsystem des Anwenders angepasst sind.

6. Vorrichtung nach Anspruch 5,
**dadurch gekennzeichnet, dass** die oben genannten Mittel zur optischen Korrektur, die an das Okularsystem des Anwenders angepasst sind, regelbar sind.

Figure 1

Figure 2

Figure 3

Figure 4

Figure 5

Figure 6

Figure 7

Figure 8

Figure 9

Figure 10

Figure 11

Figure 12

Figure 13

Figure 14

Figure 15

Figure 16

Figure 17

Figure 18

Figure 19

**EP 1 714 179 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6252565 B
- US 5384654 A